(19) Europäisches Patentamt
European Patent Office
Office européen des brevets

(11) Numéro de publication: **0 306 882 B1**

(12) ## FASCICULE DE BREVET EUROPEEN

(45) Date de publication de fascicule du brevet: **23.12.92** (51) Int. Cl.⁵: **B65G 51/03**, B65G 47/51

(21) Numéro de dépôt: **88114450.5**

(22) Date de dépôt: **05.09.88**

(54) **Procédé et dispositif de transfert et d'accumulation d'éléments d'emballage par soufflage d'air.**

(30) Priorité: **07.09.87 FR 8712393**

(43) Date de publication de la demande:
**15.03.89 Bulletin 89/11**

(45) Mention de la délivrance du brevet:
**23.12.92 Bulletin 92/52**

(84) Etats contractants désignés:
**AT BE CH DE ES FR GB GR IT LI LU NL SE**

(56) Documents cités:
**WO-A-81/01281**
**DE-A- 1 456 914**
**DE-A- 2 903 320**
**GB-A- 1 554 170**

(73) Titulaire: **ETABLISSEMENTS NEU**
**70, Rue du Collège**
**F-59708 Marcq en Baroeul Cedex(FR)**

(72) Inventeur: **Bernard, Frédéric**
**9/23 Allée des Colombiers**
**F-59650 Villeneuve d'Ascq(FR)**
Inventeur: **Carlier, Michel**
**125 Avenue du Maire Catteau**
**F-59118 Wambrechies(FR)**

(74) Mandataire: **Casalonga, Axel et al**
**BUREAU D.A. CASALONGA - JOSSE Morassistrasse 8**
**W-8000 München 5(DE)**

Rank Xerox (UK) Business Services

## Description

La présente invention est relative à un procédé et un dispositif de transfert et d'accumulation d'éléments d'emballage en forme de boîte ouverte sur une face, utilisant des moyens de soufflage d'air, pour la collecte, le stockage et la distribution des éléments d'emballage. Des procédés et dispositifs de ce genre sont décrits dans WO 81/01281.

On connaît également, par exemple par le brevet US 3.953.076 (HURD), des dispositifs de transfert par soufflage d'air comportant un caisson le long d'un trajet que doit suivre un élément d'emballage. La paroi supérieure du caisson présente des perforations et des fentes transversales. De l'air à faible pression alimentant le caisson permet d'assurer la sustentation et la propulsion des éléments d'emballage à transporter.

Lors de la fabrication et de l'asssemblage de tels éléments d'emballage, on peut également utiliser des transporteurs à bande lisse effectuant la liaison entre les différentes machines de fabrication et d'assemblage. On prévoit généralement des moyens de stockage par accumulation d'un certain nombre d'éléments d'emballage afin d'absorber les irrégularités de fonctionnement des différentes machines dont les cadences peuvent être différentes.

Le brevet US 3.105.720 (BARKER) montre l'application d'un transfert par soufflage d'air à un tel dispositif d'accumulation dans lequel les différents éléments d'emballage se trouvent mis en attente sur une plaque horizontale. On connaît également des dispositifs d'accumulation assurant la liaison entre plusieurs machines en amont et en aval dans lesquels les éléments d'emballage en attente sont accumulés dans un circuit annulaire horizontal.

Ces dispositifs de type connu sont encombrants et leur capacité d'accumulation s'avère vite insuffisante compte tenu de l'augmentation des cadences des machines. Il en résulte que les machines situées en amont et en aval du dispositif d'accumulation restent très dépendantes les unes des autres.

Dans le cas où les éléments d'emballage ont une forme de boîte ouverte sur une face et où il est nécessaire de modifier l'orientation d'une partie de ces éléments d'emballage avant l'assemblage, les dispositions connues présentent en outre l'inconvénient de nécessiter des moyens de retournement complexes et augmentant encore l'encombrement de l'ensemble.

La présente invention a donc pour objet la réalisation d'un tel dispositif de transfert et d'accumulation d'éléments d'emballage qui assure une importante capacité de stockage malgré un encombrement réduit et qui permette en outre le retournement automatique des éléments d'emballage en forme de boîte ouverte sur une face, simplifiant ainsi la liaison entre le dispositif d'accumulation et de stockage et les différentes machines amont et aval.

Tel qu'il est revendiqué, le dispositif de transfert et d'accumulation d'éléments d'emballage en forme de boîte ouverte sur une face utilise des moyens de soufflage d'air sur un trajet d'accumulation en boucle fermée auquel se raccordent au moins une machine amont alimentant le trajet d'accumulation en éléments d'emballage et au moins une machine aval alimentée en éléments d'emballage à partir du trajet d'accumulation. Selon l'invention, ladite boucle fermée est disposée sensiblement verticalement et comprend une portion de trajet horizontal supérieur, une portion de trajet horizontal inférieur située sous la portion supérieure et deux portions verticales de raccordement d'extrémité incurvées. Le dispositif comprend en outre au moins un trajet de raccordement de sortie en communication avec la portion de trajet supérieur et au moins un trajet de raccordement de sortie en communication avec la portion de trajet inférieur. La machine aval est reliée aux deux trajets de raccordement précités' de façon à recevoir des éléments d'emballage dans une position et des éléments d'emballage en position retournée.

On comprend en effet que les éléments d'emballage se trouvent dans un sens sur la portion supérieure du trajet et retournée sur la portion inférieure. Dans ces conditions, il suffit de relier une machine à la fois à la portion supérieure du trajet et à la portion inférieure du trajet pour obtenir automatiquement une double alimentation en éléments d'emballage dans un sens et dans l'autre.

La boucle fermée est avantageusement formée par un caisson de soufflage d'air délimité sous sa face supérieure par une paroi perforée munie de fentes inclinées dans le sens du transport des éléments d'emballage.

La portion de raccordement d'extrémité correspondant à la remontée des éléments d'emballage comprend de préférence un deuxième caisson de soufflage d'air disposé à l'intérieur de la boucle. On notera que ce deuxième caisson peut être supprimé selon les éléments d'emballage à transporter et selon la différence de niveau entre la portion de trajet supérieure et la portion de trajet inférieure.

Les éléments d'emballage présentent avantageusement une section circulaire, la boucle fermée présentant alors un tablier de transport par soufflage d'air capable de recevoir plusieurs éléments d'emballage côte à côte sans séparation autre que les guides latéraux d'extrémités. Les éléments d'emballage se trouvent alors stockés les uns contre les autres, leur section circulaire leur permettant une rotation relative lorsqu'ils entrent en contact respectif, l'ensemble des éléments d'emballage se déplaçant continuellement sur la boucle fermée verticale du dispositif de l'invention.

Dans un autre mode de réalisation, adapté en particulier à des éléments d'emballage n'ayant pas une section circulaire, la boucle fermée comprend un tablier de transport par soufflage d'air et des moyens de séparation et de guidage latéral pour maintenir les éléments d'emballage en au moins une file d'éléments individuels. Pour augmenter les capacités d'accumulation, on prévoit avantageusement plusieurs files disposées côte à côte, l'ensemble des éléments d'emballage se déplaçant comme précédemment en continu sur la boucle fermée verticale.

Les machines situées en amont du dispositif d'accumulation de l'invention sont de préférence toutes raccordées à la même première partie de trajet horizontal de la boucle fermée. Les machines placées en aval du dispositif d'accumulation sont au contraire avantageusement raccordées à la fois à ladite première partie de trajet horizontal de la boucle fermée, recevant ainsi les éléments d'emballage dans la position qu'ils occupaient à la sortie des machines amont et à la deuxième partie de trajet horizontale de la boucle fermée, recevant ainsi les éléments d'emballage en position retournée.

Les raccordements aux différentes machines se font également avantageusement par des caissons de soufflage d'air munis de guides latéraux définissant une file individuelle d'éléments d'emballage. Les caissons sont convenablement inclinés pour rattraper la différence de niveau éventuelle entre la machine correspondante et la partie de trajet horizontale à laquelle ils sont raccordés. Les raccordements peuvent se faire sans difficulté, perpendiculairement au trajet de la boucle fermée.

Les raccordements de sortie des éléments d'emballage sont de préférence facilités en prévoyant sur le tablier de transport de la boucle fermée un certain nombre de fentes dirigées vers la sortie au voisinage du raccordement de sortie.

Egalement revendiqué, le procédé de transfert et d'accumulation d'éléments d'emballage en forme de boîte ouverte sur une face utilise des moyens de soufflage d'air sur un trajet d'accumulation en boucle fermée, comportant des raccordements d'entrée et des raccordements de sortie. Selon l'invention, le procédé consiste à faire se déplacer les éléments d'emballage sur un trajet en boucle fermée sensiblement vertical, à prélever les éléments d'emballage ainsi accumulés sur la boucle fermée, à la fois sur la portion de trajet horizontale supérieure et sur la portion de trajet horizontale inférieure, de façon à obtenir automatiquement des éléments d'emballage dans une position et des éléments d'emballage dans la position retournée.

L'invention sera mieux comprise à l'étude d'un mode de réalisation particulier pris à titre d'exemple, nullement limitatif et illustré par les dessins annexés, sur lesquels :

la figure 1 est une vue schématique en élévation d'un dispositif de transfert et d'accumulation selon l'invention, adapté à des boîtes ouvertes de section circulaire;

la figure 2 est une vue de dessus du dispositif de la figure 1;

la figure 3 est une vue partielle en coupe agrandie selon III-III de la figure 2;

la figure 4 montre schématiquement les moyens de sustentation et de propulsion des éléments d'emballage; et

la figure 5 illustre schématiquement et à une autre échelle l'assemblage d'un emballage complet à partir d'éléments d'emballage stockés dans le dispositif de l'invention.

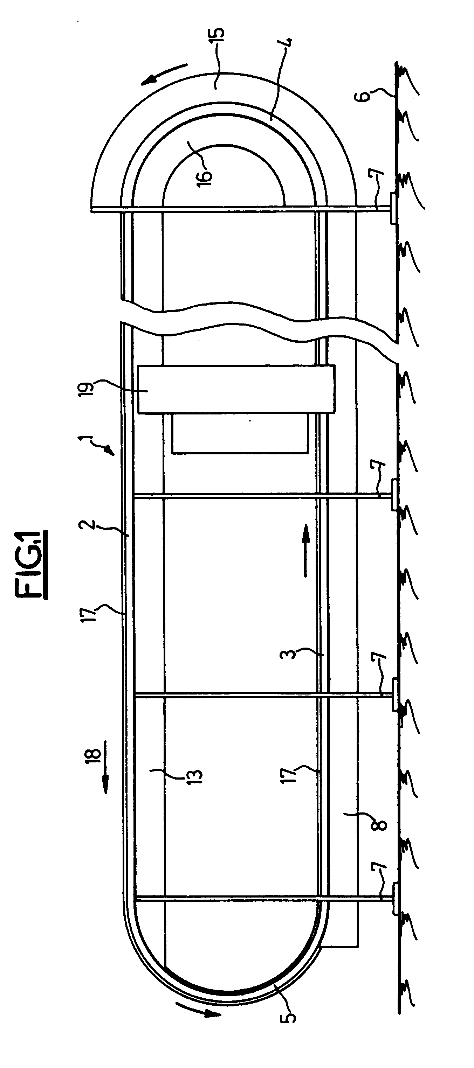

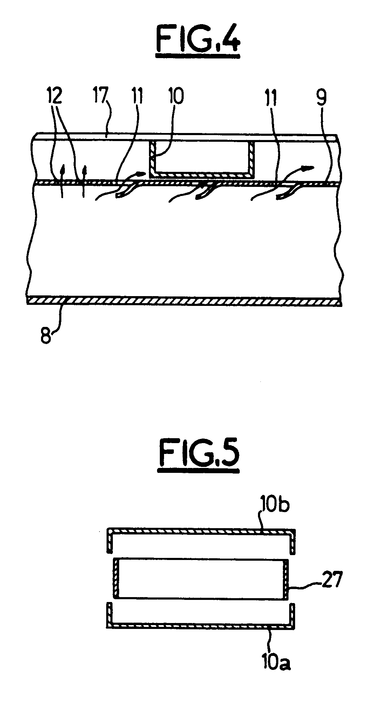

Tel qu'il est illustré sur les figures 1 à 4, le dispositif de l'invention comprend une boucle fermée référencée 1 dans son ensemble, constituée par une portion de trajet horizontal supérieur 2, une portion de trajet horizontal inférieur 3 reliée à la portion supérieure 2 d'un côté par une portion de raccordement incurvée 4 qui permet la remontée des éléments d'emballage, et de l'autre côté par une portion d'extrémité incurvée 5 qui permet leur descente. L'ensemble du dispositif est simplement posé sur le sol 6 au moyen de montants verticaux 7. Le trajet horizontal inférieur 3 est occupé sur toute sa largeur et toute sa longueur par un caisson d'alimentation d'air 8 dont la paroi supérieure 9, qui constitue un tablier de transport pour les éléments d'emballage 10, est une plaque plane munie de fentes transversales 11 (figure 4) qui assurent le déplacement de l'élément d'emballage 10 ainsi que de perforations 12 assurant la sustentation de l'élément d'emballage 10. Sur la figure 4, on a représenté schématiquement quelques fentes 11 et quelques perforations 12.

Le trajet horizontal supérieur 2 est constitué de la même manière par un caisson d'alimentation d'air 13 dont la paroi supérieure 14 présente, comme c'était le cas pour la paroi supérieure 9, une pluralité de fentes transversales et de perforations.

Dans la portion de raccordement de montée 4, le dispositif comporte un premier caisson extérieur incurvé 15 et un deuxième caisson incurvé interne 16. Le trajet des éléments d'emballage est situé entre les caissons 15 et 16. Chacun de ces caissons est délimité vers le trajet des éléments d'emballage, par une plaque incurvée suivant ce trajet et présentant des perforations et des fentes de propulsion par soufflage d'air.

Une pluralité de tiges de guidage longitudinales 17 sont en outre prévues tout autour de la boucle fermée 1 au-dessus des plaques 9 et 14, de façon à maintenir les éléments d'emballage 10. On notera que la portion de raccordement d'extrémité de descente 5 ne comporte aucun caisson de soufflage mais simplement les tiges de guidage 17 incurvées dans cette portion, de sorte que les éléments d'emballage passent simplement de la portion supérieure 2 à la portion inférieure 3 par l'effet de la gravité.

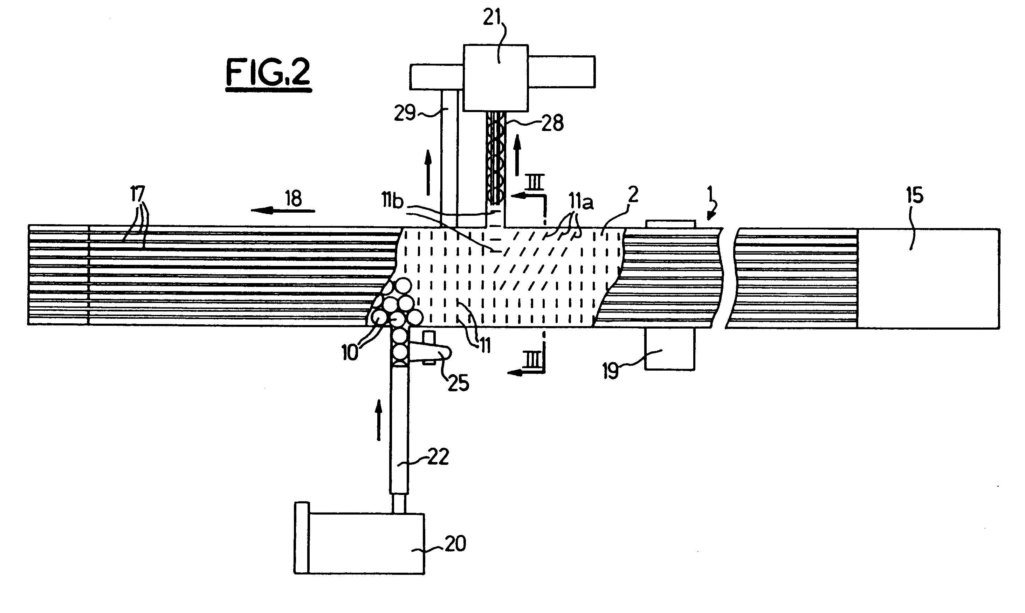

Sur la figure 1, on a représenté pas des flèches 18 le sens général de déplacement de l'ensemble des éléments d'emballage dans le dispositif d'accumulation de l'invention. On retrouve la même flèche 18 sur la figure 2.

On a représenté également sur les figures 1 et 2 et de manière très schématique, une soufflante 19 d'alimentation en air à faible pression reliée aux différents caissons de sustentation et de propulsion.

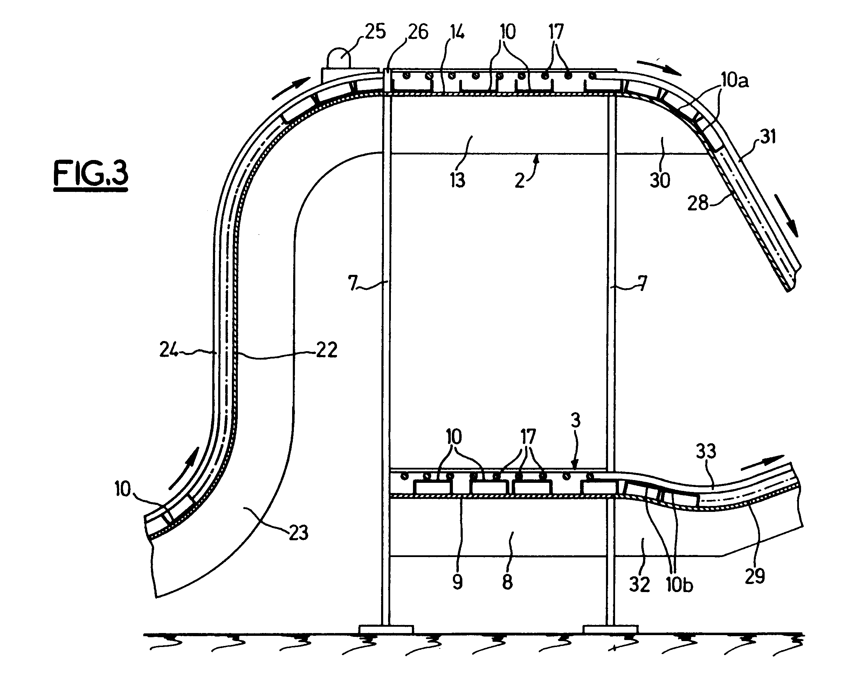

On a en outre représenté sur la figure 2 de manière schématique et à titre d'exemple une machine d'alimentation amont 20 et une machine d'assemblage aval 21. La machine amont 20 qui réalise par exemple l'élément d'emballage 10, est reliée à la portion de trajet horizontal supérieure 2 de la boucle fermée 1 par un trajet de raccordement 22 constitué par la face supérieure d'un caisson de soufflage 23 définissant une file individuelle d'éléments d'emballage 10. Les éléments d'emballage 10 issus de la machine 20 sont transportés grâce à des fentes transversales prévues dans la face supérieure du caisson de soufflage 23 tout en étant maintenus par des guides supérieurs 24 visibles sur la figure 3. Pour rattraper la différence de niveau entre la machine 1 et le trajet supérieur 2, le trajet de raccordement 22 permet la remontée des éléments d'emballage 10 sous l'action d'une soufflante additionnelle 25. De ce fait et comme on peut le voir sur la figure 2 et sur la figure 3, les éléments d'emballage 10 issus de la machine 20 sont déversés à 90° sur le trajet supérieur 2 le la boucle 1 où ils sont alors emportés en déplacement selon les flèches 18 sur le plateau de transfert 14 par soufflage d'air en provenance du caisson 13.

Les différents éléments d'emballage se présentent ici sous la forme de boîtes ouvertes sur une face comme on peut le voir en particulier sur les figures 3 et 4 et de section circulaire comme on peut le voir sur la figure 2. L'ensemble des boîtes 10 en déplacement sur la boucle fermée 1 constitue un stockage dénué de toute séparation interne, les boîtes 10 pouvant éventuellement rouler les unes contre les autres et étant simplement guidées par les tiges 17 et par des parois latérales 26 (figure 3).

A titre d'exemple, on a représenté sur la figure 2 une machine aval d'assemblage 21 qui doit recevoir simultanément deux groupes d'éléments d'emballage 10 dont l'un est en position retournée, afin de réaliser un assemblage tel qu'illustré sur la figure 5. Cet assemblage est constitué par un premier élément d'emballage 10a formant le fond d'une boîte, un intercalaire cylindrique 27 et un deuxième élément d'emballage 10b identique à l'élément 10a mais retourné et formant le couvercle de la boîte. Il est donc nécessaire d'alimenter la machine 21 avec des fonds 10a et avec des couvercles 10b.

Grâce à la disposition de la boucle fermée verticale 1 de l'accumulateur selon l'invention, cette alimentation double est fait de manière très simple au moyen d'un premier trajet de raccordement 28 en communication avec la portion de trajet supérieur 2 et un deuxième trajet de raccordement 29 en communication avec le trajet inférieur 3. Le trajet 28 définissant une file individuelle d'éléments d'emballage, reçoit, dans l'exemple illustré, des éléments d'emballage 10 avec la base dirigée vers le bas, c'est-à-dire des fonds 10a, tandis que le trajet de raccordement 29 définissant également une file individuelle, reçoit des éléments d'emballage 10 retournés, c'est-à-dire constituant des couvercles 10b.

La sortie perpendiculaire des éléments d'emballage 10 est facilitée par l'existence de fentes 11a légèrement inclinées en direction des trajets de raccordement 28,29 et de fentes 11b se trouvant dans l'axe des trajets de raccordement 28,29. Les éléments d'emballage 10 se déplaçant dans le sens de la flèche 18 ont donc tendance à être poussés vers l'ouverture reliant le trajet supérieur 2 ou inférieur 3 aux trajets de raccordement 28,29, lesquels sont avantageusement perpendiculaires aux trajets 2,3. La sortie des éléments d'emballage 10 se fait ainsi de manière automatique sans qu'il y ait besoin de prévoir d'autres moyens de transfert ou de changement de direction.

Dans l'exemple illustré, le trajet de raccordement 28 permet la descente des fonds 10a, leur sortie étant facilitée par un caisson de soufflage de sortie 30 (figure 3). Des tiges de guidage supérieures 31 empêchent la chute des éléments d'emballage lors de leur descente par gravité dans le trajet de raccordement 28. Le trajet de raccordement 29 est orienté légèrement vers le haut et le déplacement des couvercles 10b se fait par soufflage d'air à partir d'un caisson de soufflage 32 muni comme les précédents de fentes de propulsion et de perforations de sustentation. Des tiges de guidage 33 assurent le maintien des couvercles 10b lors de leur déplacement sur le trajet de raccordement 29.

Dans l'exemple illustré, les éléments d'emballage tournent en vrac sur la boucle fermée verticale 1 du dispositif d'accumulation, ce que est possible en raison de leur section circulaire. La largeur de la boucle fermée 1 peut être adaptée au nombre de machines à relier et à la capacité de stockage souhaitée.

Dans un autre mode de réalisation où les objets à déplacer et à stocker présenteraient une autre section, il serait facile d'adapter le dispositif de l'invention en séparant entre elles les différentes files parallèles d'éléments d'emballage se déplaçant comme précédemment selon le trajet vertical de la boucle fermée 1.

**Revendications**

1. Dispositif de transfert et d'accumulation d'éléments d'emballage en forme de boîte ouverte sur une face, utilisant des moyens de soufflage d'air sur un trajet d'accumulation en boucle fermée (1) auquel se raccordent au moins une machine amont (20) alimentant le trajet d'accumulation en éléments d'emballage et au moins une machine aval (21) alimentée en éléments d'emballage à partir du trajet d'accumulation, caractérisé par le fait que ladite boucle fermée (1) est disposée sensiblement verticalement et comprend une portion de trajet horizontal supérieur (2), une portion de trajet horizontal inférieur (3) située sous la portion supérieure et deux portions verticales de raccordement d'extrémité (4,5) incurvées, le dispositif comprenant en outre au moins un trajet de raccordement (28) de sortie en communication avec la portion de trajet supérieur (2) et au moins un trajet de raccordement (29) de sortie en communication avec la portion de trajet inférieur (3), la machine aval (21) étant reliée aux deux trajets de raccordement (28,29) précités de façon à recevoir des éléments d'emballage dans une position et des éléments d'emballage en position retournée.

2. Dispositif selon la revendication 1, caractérisé par le fait que la boucle fermée est formée par un caisson de soufflage d'air (8,13) délimité sur sa face supérieure par une paroi perforée (9,14) munie de fentes inclinées dans le sens du transport des éléments d'emballage.

3. Dispositif selon les revendications 1 ou 2, caractérisé par le fait que la portion de raccordement d'extrémité (4) correspond à la remontée des éléments d'emballage, comprend en outre un deuxième caisson de soufflage d'air (16) disposé à l'intérieur de la boucle.

4. Dispositif de transfert et d'accumulation selon l'une quelconque des revendications précédentes, caractérisé par le fait que les éléments d'emballage (10) ont une section circulaire et que la boucle fermée (1) comprend un tablier de transport par soufflage d'air capable de recevoir plusieurs éléments d'emballage côte à côte sans séparation interne.

5. Dispositif de transfert et d'accumulation selon l'une quelconque des revendication 1 à 3, caractérisé par le fait que la boucle fermée (1) comprend un tablier de transport par soufflage d'air et des moyens de séparation et de guidage latéral pour maintenir les éléments d'emballage en au moins une file d'éléments individuels.

6. Dispositif de transfert et d'accumulation selon l'une quelconque des revendications précédentes, caractérisé par le fait que les machines amont (20) sont toutes raccordées à la portion de trajet horizontal supérieur de la boucle fermée.

7. Dispositif selon l'une quelconque des revendications précédentes, caractérisé par le fait que les raccordements aux différentes machines se font par des caissons de soufflage d'air munis de guides latéraux définissant une file individuelle d'éléments d'emballage, lesdits caissons étant convenablement inclinés pour rattraper la différence de niveau entre la machine correspondante et la partie de trajet horizontale à laquelle ils sont raccordés.

8. Dispositif de transfert et d'accumulation selon la revendication 7, caractérisé par le fait que le raccordement se fait perpendiculairement au trajet de la boucle fermée.

9. Dispositif de transfert et d'accumulation selon les revendication 7 ou 8, caractérisé par le fait que le raccordement de sortie est facilité par des fentes dirigées vers la sortie au voisinage du raccordement de sortie.

10. Procédé de transfert et d'accumulation d'éléments d'emballage en forme de boîte ouverte sur une face, utilisant des moyens de soufflage d'air sur un trajet d'accumulation en boucle fermée, comportant des raccordements d'entrée et des raccordements de sortie, caractérisé par le fait que l'on fait se déplacer les éléments d'emballage sur un trajet en boucle fermée sensiblement vertical et que l'on prélève les éléments d'emballage ainsi accumulés sur la boucle fermée, à la fois sur la portion de trajet horizontal supérieur (2) et sur la portion de trajet horizontal inférieur (3) de façon à obtenir automatiquement des éléments d'emballage dans une position (10a) et des éléments d'emballage dans la position retournée (10b).

## Claims

1. Device for transferring and accumulating packaged items in the form of boxes open on one side, using means for blowing an air flow on an accumulating line in a closed loop (1) to which is connected at least one upstream machine (20) which feeds the accumulating line with packaging elements, and at least one downstream machine (21) which is fed with packaging elements from the accumulating line, characterized in that said closed loop (1) is substantially vertical disposed and comprises an upper horizontal portion (2) of the line and a lower horizontal portion (3) of the line located below said upper portion, and two outer, vertical, curved connection portions (4, 5), said device furthermore comprising at least one exit connection line (28) associated with the said upper line portion (2) and at least one exit connection line (29) associated with the said lower line portion (3), said downstream machine (21) being connected with the said two connection lines (28, 29) mentioned above so that it receives packaging elements in the one position and packaging elements in the inverted position.

2. Device in accordance with claim 1, characterized in that the said closed loop is made up by an air blow pressure vessel (8, 13) which is limited on its upper surface by means of a perforated wall (9, 14) provided with slots inclined in the transport direction of the said packaging elements.

3. Device in accordance with claims 1 or 2, characterized in that the said outer connection portions (4) for lifting the said packaging elements is further provided with a second air blow pressure vessel (16) which is disposed inside the said loop.

4. Device for feeding and accumulating in accordance with any one of the preceding claims, characterized in that the said packaging elements (10) have a circular cross section and that the said closed loop (1) comprises a transport plane for advancing them under the effect of an air flow, which is able to receive a plurality of said packaging elements side-by-side without internal separation.

5. Device for feeding and accumulating in accordance with any one of the claims 1 through 3, characterized in that the said closed loop (1) comprises a plane for advancing under the effect of an air flow and with means for separating and laterally guiding such packaging elements for maintaining them in at least one row of individual elements.

6. Device for feeding and accumulating in accordance with any one of the preceding claims, characterized in that the upstream machines (20) are all connected with the horizontal upper line portion of the closed loop.

7. Device in accordance with any one of the preceding claims, characterized in that the connections with the various machines are made by means of air blow pressure vessels provided with lateral guide means which define each an individual row of packaging elements, said pressure vessels being adequately inclined disposed as to compensate for the difference of level between the respective machine and the said horizontal line portion with which they are connected.

8. Device for feeding and accumulating in accordance with claim 7, characterized in that said connection is made perpendicular with respect to the line of the closed loop.

9. Device for feeding and accumulating in accordance with the claims 7 or 8, characterized in that the exit connection is facilitated by slots which are disposed adjacent to the exit connection and directed toward said exit.

10. Device for transferring and accumulating packaged items in the form of boxes open on one side, using means for blowing an air flow on an accumulating line in a closed loop which is provided with entry connections and exit connections, characterized in that one makes said packaging elements to advance on a substantially vertical line in closed loop and that one takes out said packaging elements having accumulated in said closed loop simultaneously from the upper (2) horizontal line and from the lower (3) horizontal line so that one obtains automatically packaging elements in one position (10a) and packaging elements in the inverted position (10b).

## Patentansprüche

1. Vorrichtung zum Übergeben und Speichern von Artikelpackungen in Form von an einer Seite offenen Schachteln, unter Verwendung von Mitteln zum Blasen eines Luftstroms auf eine Sammelstrecke in geschlossener Schleife (1), an die sich wenigstens eine in Vorschubrichtung vorgeschaltete Maschine (20), die die Sammelstrecke mit Verpackungselementen beschickt, und wenigstens eine in Vorschubrichtung nachgeschaltete Maschine (21), die von der Sammelstrecke mit Verpackungselementen beschickt wird, anschließt, dadurch gekennzeichnet, daß diese geschlossene Schleife (1) im wesentlichen vertikal angeordnet ist und einen oberen horizontalen Streckenteil (2) und einen unteren horizontalen Streckenteil (3), der unterhalb dieses oberen Teil angeordnet ist, sowie zwei äußere, vertikale, gekrümmte Verbindungsteile (4, 5) umfaßt, wobei die Vorrichtung ferner wenigstens eine Ausgangsverbindungsstrecke (28) in Verbindung mit dem oberen Streckenteil (2) und wenigstens eine Ausgangsverbindungsstrecke (29) in Verbindung mit dem unteren Streckenteil (3) umfaßt, wobei die in Vorschubrichtung nachgeschaltete Maschine (21) mit den beiden vorgenannten Verbindungsstrecken (28, 29) so verbunden ist, daß sie Verpackungselemente in der einen Position und Verpackungselemente in der umgekehrten Position erhält.

2. Vorrichtung gemäß Anspruch 1, dadurch gekennzeichnet, daß die geschlossene Schleife durch ein Luftstrom-Druckgefäß (8, 13) gebildet wird, das auf seiner oberen Fläche durch eine perforierte Wand (9, 14) begrenzt wird, die mit in Vorschubrichtung der Verpackungselemente geneigten Spalten versehen ist.

3. Vorrichtung gemäß den Ansprüchen 1 oder 2, dadurch gekennzeichnet, daß der äußere Verbindungsteil (4) zum Heben der Verpackungselemente ferner ein zweites Luftstrom-Druckgefäß (16) aufweist, das innerhalb der Schleife angeordnet ist.

4. Vorrichtung zum Vorschieben und Speichern gemäß einem beliebigen der vorstehenden Ansprüche, dadurch gekennzeichnet, daß die Verpackungselemente (10) einen kreisförmigen Querschnitt haben und daß die geschlossene Schleife (1) eine Ebene zum Vorschub unter der Einwirkung von Luftströmung aufweist, die eine Vielzahl von Verpackungselementen Seite an Seite ohne interne Trennung voneinander aufnehmen kann.

5. Vorrichtung zum Vorschieben und Speichern gemäß einem beliebigen der Ansprüche 1 bis 3, dadurch gekennzeichnet, daß die geschlossene Schleife (1) eine Ebene zum Vorschub unter der Einwirkung vom Luftströmung sowie Mittel zum Trennen und zur seitlichen Führung aufweist, um die Verpackungselemente in wenigstens einer Reihe Einzelelemente zu halten.

6. Vorrichtung zum Vorschieben und Speichern gemäß einem beliebigen der vorstehenden Ansprüche, dadurch gekennzeichnet, daß die in Vorschubrichtung vorgeschalteten Maschinen (20) alle mit dem horizontalen oberen Streckenteil der geschlossenen Schleife verbunden sind.

7. Vorrichtung gemäß einem beliebigen der vorstehenden Ansprüche, dadurch gekennzeichnet, daß die Verbindungen zu den verschiedenen Maschinen durch Luftstrom-Druckgefäße hergestellt werden, die mit seitlichen Führungen versehen sind, die jeweils eine einzelne Reihe Verpackungselemente definieren, wobei diese Druckgefäße entsprechend schräg angeordnet sind, um den Höhenunterschied zwischen der entsprechenden Maschine und der horizontalen Strecke auszugleichen, mit der sie verbunden sind.

8. Vorrichtung zum Vorschieben und Speichern gemäß Anspruch 7, dadurch gekennzeichnet, daß diese Verbindung im rechten Winkel zur Strecke der geschlossenen Schleife hergestellt wird.

9. Vorrichtung zum Vorschieben und Speichern gemäß den Ansprüchen 7 oder 8, dadurch gekennzeichnet, daß die Verbindung mit dem Ausgang erleichtert wird durch Spalte, die in der Nähe der Verbindung mit dem Ausgang in Richtung zum Ausgang zu gerichtet sind.

10. Verfahren zum Übergeben und Speichern von Artikelpackungen in Form von an einer Seite offenen Schachteln, unter Verwendung von Mitteln zum Blasen eines Luftstroms auf eine Sammelstrecke in geschlossener Schleife, die Eingangsverbindungen und Ausgangsverbindungen aufweist, dadurch gekennzeichnet, daß man diese Verpackungselemente auf einer im wesentlichen senkrecht stehenden Strecke in geschlossener Schleife sich vorschieben läßt und man die sich auf dieser geschlossenen Schleife angesammelt habenden Verpackungselemente gleichzeitig von der oberen (2) horizontalen Strecke und von der unteren (3) horizontalen Strecke abnimmt, so daß man automatisch Verpackungselemente in der einen Position (10a) und Verpackungselemente in der umgekehrten Position (10b) erhält.

FIG.1

FIG.2

FIG.3

## FIG.4

## FIG.5